# EUROPEAN PATENT APPLICATION

(11) **EP 1 188 576 A2**
(43) Date of publication of application: **20.03.2002**
(21) Application number: 01307780.5
(22) Date of filing: 12.09.2001
(51) Int. Cl.: B41M 7/00, B32B 31/20

(54) **Facility and methods for generating laminated publications**

(30) Priority: 13.09.2000 US 660525
(71) Applicant: Hewlett-Packard Company, Palo Alto, CA 94304 (US)
(72) Inventor: Greeven, Michelle D., Corvallis, OR 97330 (US); Messner, Amy E., Eugene, OR 97408 (US); Hammerstad, Diane R., Corvallis, OR 97330 (US)
(74) Representative: Jackson, Richard Eric

(57) **Abstract**

A printer (10) has a housing (12) enclosing a print engine (42) and a lamination facility (50). A memory device (22) communicates with the print engine and stores a number of printable selections. A selector (60, 62) on the housing operates to select one of the selections, and a display device may display the selection options. The selections may be categorized by age range, or by subject matter. Subject matter may include examples such as printable games, art, news, information, and financial data. The printer may reside in a commercial establishment, and may include markings associated with the establishment.

## Description

### Field of the Invention

This invention relates to a method and apparatus for creating laminated publications, and more particularly to stand-alone printing devices storing data to be printed and having lamination capabilities and method for using same.

### Background and Summary of the Invention

People often have slack time when away from the productive or pleasurable activities of office or home, such as when waiting for a meal at a restaurant, or riding as a passenger in an automobile. Parents are particularly conscious of the need to keep children occupied when confined in a vehicle, or in public facilities such as restaurants.

Parents and children may select in advance books, toys or games to occupy children when slack time is expected, and adults may select similar diversions to carry along when a wait is expected. However, when a wait was not anticipated, or when the selected diversion proves to be unsuitable, the slack time boredom may remain.

Some public places offer diversions for customers. For instance, family-oriented restaurants offer gift toys with children's meals, and may have a supply of pre-printed place mats with puzzles, games, or artwork to color with supplied crayons or pens. Doctors' waiting rooms and the like offer similar diversions. Other sites may also offer a selection of diversions for adults, typically reading material such as magazines and newspapers. However, these may not suit the particular interests of the visitor, or may be out of date or in limited supply. Likewise, children's diversions may be of interest only to a limited age range, and may be familiar from previous visits.

The present invention overcomes the limitations of the prior art by providing a printer having a housing enclosing a print engine and a lamination facility. A memory device communicates with the print engine and stores a number of printable selections. A selector on the housing operates to select one of the selections, and a display device may display the selection options. The selections may be categorized by age range, or by subject matter. Subject matter may include examples such as printable games, art, news, information, and financial data. The printer may reside in a commercial establishment, and may include markings associated with the establishment.

### Brief Description of the Drawings

Figure 1 is a perspective view of a printer according to a preferred embodiment of the invention.

Figure 2 is a cross sectional simplified view of the printer of Figure 1.

Figure 3 is an enlarged fragmentary view of an interface panel of the printer of Figure 1.

### Detailed Description of a Preferred Embodiment

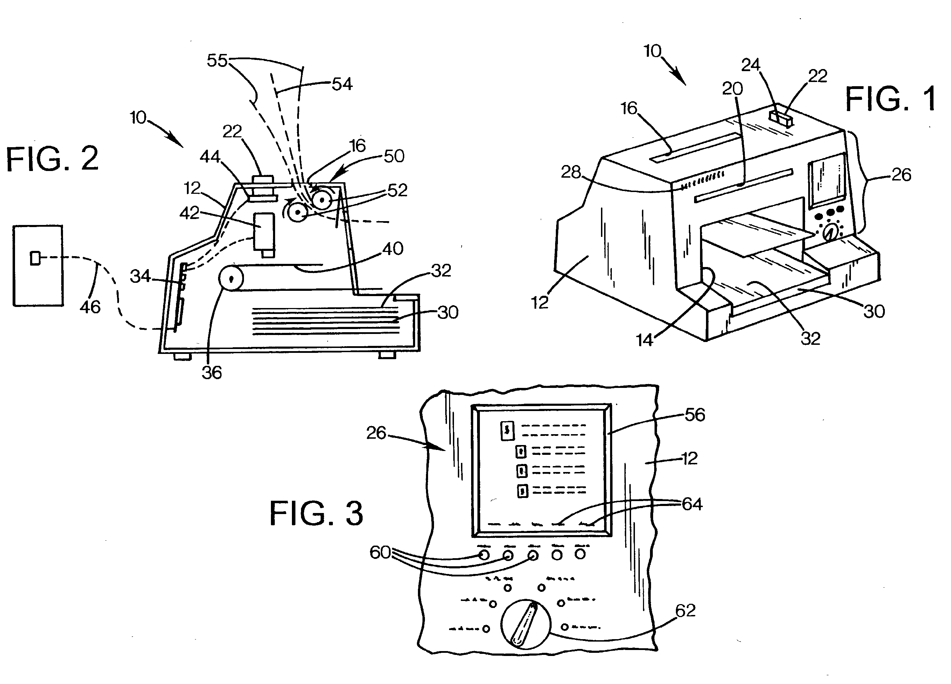

Figure 1 shows a printer 10 having a housing 12. The housing defines a media aperture 14, where media to be printed is inserted and printed media is ejected. A laminator inlet 16 and a laminator outlet 20 are defined in the housing for receiving a sandwich of printed media and lamination materials and for ejecting the resulting laminated media, respectively. A content module 22 is received in a module aperture 24 defined in the housing, and an interface panel 26 occupies one surface of the housing. A brand label 28 may indicate the business or location where the printer is to be installed, and the printer housing may be colored and/or shaped to be consistent with the owner's commercial color scheme, design style, and logo colors. A media tray 30 carries a stack of media 32 to be printed.

Figure 2 shows the internal and functional elements of the printer 10. Control circuitry 34 is connected to a media feed mechanism 36 that advances a sheet 40 beneath the path of a reciprocating ink jet print cartridge 42, also connected to the circuitry. The content module 22 is connected to an electrical connector 44 connected to the circuitry 34. In certain embodiments, the circuitry is connected to external computers, the Internet, or other information sources by a connection 46 such as a wire connected to a telecommunication network. Such an information source is expected to be called upon to deliver content from one or more content providers to be combined with other information in the present invention.

A laminator system 50 includes a pair of heated driven rollers 52 abutting each other to define an elongated nip. The laminator inlet 16 receives a sheet of printed media 54 sandwiched between heat-activatable lamination material 55. The sandwich passes between the rollers, which apply heat and pressure to generate a laminated output. The laminated sheet is ejected from the laminator outlet 20. The printed sheet may be laminated immediately after printing, such as to provide a wipeable surface for dry erase markers, or to create a durable document for use in messy environments. The printer may include a cutter for cutting printed output into smaller sized documents, such as may be used to generate custom playing cards or trading cards, which may also be generated on perforated sheets that are segmented after printing. For laminating card-sized output, laminating sheets having suitably sized pockets are used. Such pocket sheets may be perforated for segmentation of laminated cards after lamination.

The printer is only one example of possible configurations. The print engine may be any other type, such as a laser printing engine. The media feed configuration may vary widely. The content module may be removable as illustrated, in the form of a smart chip or memory chip encapsulated in a package that has contacts that interface with the connector 44. Alternatively, the module may be an internal memory device that may be permanently programmed with content when the printer is produced, or an internal module that may be reprogrammed from an external source as desired. In other alternative embodiments, the memory module may be provided by a removable storage media such as a floppy disc or CD-ROM, inserted in a media reader connected to the circuitry. The optional external data connection 46 may be a telephone connection to the Internet, or may be a wireless communication link via any other means.

Figure 3 shows a close up view of the control or interface panel 26, used by a user to select content to be printed. The panel includes a display screen 56 on which may be displayed color text and images, an array of selector buttons 60, each labeled with text, and a multi-position rotary switch 62 rotatable to indicate a particular selection, each labeled with text or graphic information. The illustrated switch configuration serves as one example. Alternative embodiments may rely entirely on a touch sensitive screen display, or may include other switches, such as a keyboard interface, or a cursor controller such as a track ball, joy stick, or mouse.

While the content module contains printable documents, templates, and data, the screen 56 displays information about that content to enable a user to identify content he or she desires to print. The screen may offer the content selections in any format, such as a menu of selections by categories and subcategories, with subcategories being displayed in response to selection of a category. An array of dynamic labels 64 may appear on the screen adjacent to respective buttons 60, so that a user may indicate a selection by pressing the corresponding button. The knob 62 is set to any of a range of selections, each preferably corresponding to a category of content to be printed.

Content categories may be unlimited. For a printer to be used by the general public, such as at a fast-food restaurant, the information set content may be categorized by age ranges, including preschool, grade school, teens, young adults, and adults. Within each age category, there may be a number of different selections. For young users, the information set content may include coloring book art, puzzles such as dot-to-dot, entertainment themes, and learning exercises. For adults, the offerings may include news, entertainment, sports, and financial news, in addition to games such as word puzzles, and pleasure reading.

The information set content may vary based on the expected site of usage. A printer located in a doctor's waiting room may include medical information, articles, and advice. A printer in a home improvement supply store may include tips, techniques, and instructions for various home projects, printable upon selection. Thus, the printing and laminating service provider can customize the content to meet their customer's expectations as well as providing current information and advertising.

### Commercial use examples

Market research has shown that many parents would prefer not to have to tote toys, or other diversions to occupy children while they wait for their meals when dining out. The above printer allows a restaurant to send its own artwork, use an agency to create unique designs, or use some of the printer manufacturer's custom-selected artwork to create age appropriate place mats. After a period of distributing the same artwork, a restaurant could submit new artwork to be burned into a ROM (content module) for that restaurant.

There are at least three ways to obtain artwork for the place mat. All of the artwork could come from a ROM that has been manufactured for the restaurant. This lends itself more to younger children that may not mind repetition as much as adults. The second method would be to retrieve content data from content providers on the Internet for storage and output by the printer. This could be done using current reformatting engines. The content may feature "timely" local ads, local events and other timely information such as news sports, and financial updates. The third option combines both of the methods above; some of the branded artwork is taken from the ROM, while the other is live, and retrieved from the Internet. The second or third options could become the restaurant's customized newspaper.

The printer may be a wide format printer that has lamination capabilities. The printer can be sold with or without a laminator, depending on customer business needs. A ROM cartridge is installed into the printer containing the artwork for the specific restaurant or business. The knob on the printer that can be turned to access different age-appropriate printouts. Printouts, in one embodiment of the invention, accepts user input to personalize the printed document by integrating the child's name into the activity place mat, based on query and entry using the display and interface. To do this, there is an alpha pad or comparable touch screen or other data entry device on the appliance, for entry of text such as the child's name. There is a selected number of different designs for each age group, preferably at least about twenty, to avoid repetition for regular customers. Additional ROMs for the appliance can be fabricated for new or different designs.

An adult version or portion of the content may be provided with crossword puzzles or items of interest could also be generated for the example restaurant. A section of the adult place mat could have headline news, current stock quotes or other items of interest to the restaurant's clientele, if this appliance were connected via a modem and phone line to current data sources on the Internet or a proprietary computer network providing the content. The laminator is available for all patrons for laminating their place mats. Each restaurant chain can determine whether their employees would take on this task or it would be available when the patrons when they are leaving.

The artwork or content could be created by the restaurant chain and then submitted to the printer manufacturer for burn-in, or the manufacturer could create several templates containing age appropriate art and activity place mats. After a convenient length of time, new artwork could be created for a restaurant. Advertising from other local merchants could be included as well as highlighted meals children's menu. A restaurant chain could have the same basic layout, with an area for regional inserts. The artwork could also come from the Internet when appropriate.

In one usage mode, the patron receives an unlaminated place mat and then is free to draw and color it as appropriate, in the manner of conventional pre-printed place mats, with lamination occurring after the patron has filled in or colored the provided artwork. Another mode would be to pre-laminate the place mats and offer dry-erase pens to do the artwork. These would not be recycled, but would go home with the patrons, potentially providing the benefit of advertising the restaurant in an individual's home.

### Home use examples

The above printer may be located in a private home for private family use. The printed and laminated output may be generated at home, and enjoyed at places and times where such a printer system is not available. Such places may include long car trips, as well as restaurants and doctors offices lacking suitable diversions for children, for instance. Adults may also desire durable take-along up-to-date reports, games, or other diversions, such as for when dining alone, riding as a passenger, or other down times are anticipated.

As with printers intended for business use, the home-based printer includes a laminator. The printer comes with pre-programmed CDs loaded with age appropriate themed activities. In addition, there may be provided a CD containing an application that enables one to use the writable CD to download one's favorite digital images from one's PC.

As above, the printer may be a wide format printer that has lamination capabilities. The printer could be controlled with either a touch-screen LCD screen, and/or a series of knobs and switches that work in conjunction with each other as illustrated. The printer may have duplexing capabilities permitting double sided printing for generating playing cards, and educational flash cards, as well as providing the general benefit of increased information for a limited media and lamination material cost. The printer may contains several applications that when accessed will prompt the user to provide graphics. The graphics may come from those stored within the appliance's RAM, or from the writable CD.

The laminator can either be an integral part of the printer, where the print roller is heated and a heated drop roller is added, or it can be a separate on-board plug-in unit. In either case, the laminator will have the ability of accepting sheet and roll laminate.

The appliance preferably contains specific applications and feature capabilities. These may include duplex printing, which also permits the generation of learning tools that enable a child to be presented with a sheet having a line drawing to "color in" on one side, and a correctly colored drawing on the other side, in the manner of a visual flash card. A customized card deck may be generated with a unique photo on each card, or a single photo on the fronts or backs of all cards, or on the faces of face cards. The laminator may provide for sheet lamination, using both pre-sectioned laminate or full sheet, or roll lamination, in which a roll is attached, and permitted to feed until a "stop button" is actuated.

Educational and theme-based content may be provided on CD or disk format. A phone line could be used to download images from a computer directly to the printer, or a writable CD could be used to obtain images. Files are specified within the printer for specific activities. The files can easily be erased and new ones added to the printer.

Any embodiment of the invention may include various other features such as a concealed cutting blade, the ability to laminate material that has been printed and placed in pre-sectioned laminate material, the ability to laminate material that has been placed in pre-sectioned laminate material, the ability to turn on and off a duplex capability in conjunction with on/off color, the ability to print a page of preestablished, related images and then have the capability of choosing the photo or image for an activity. A print size selection option may be provided, and a scanner may be provided to aid duplex printing, so that the media can be aligned for side-to-side registration by scanning the first printed side before printing the second side.

One embodiment for use in homes or businesses may operate under a subscription agreement. A telephone or other connection to a content provider may serve to automatically update content on a regular basis, under a subscription agreement. Such a device need not include an interface that allows browsing for content, and is suitable for homes without a computer or computer experience.

While the above is discussed in terms of preferred and alternative embodiments, the invention is not intended to be so limited. All indicated features and options for either the commercial or personal example may be provided on the other, or both.

## Claims

1. A printer (10) comprising:
a printing engine (42);
a data source (22, 46) in communication with the print engine and containing a plurality of different output selections; and
a selector (60, 62) in communication with the data source and operable to select an output category for printing.

2. The printer of claim 1 including a laminator (50) operable to laminate printed output of the printing engine.

3. The printer of claim 1 wherein the data source (22) is entirely contained in the printer, such that the printer stands alone free of connection to other data sources.

4. The printer of claim 1 wherein the data source comprises replaceable media.

5. The printer of claim 1 wherein the data source comprises a replaceable memory chip.

6. The printer of claim 1 including a display (56) associated with the selector and operable to display the selections, and wherein the selector is operable to receive a command identifying a selection to be printed.

7. A method of operating a printer (10) comprising:
storing a plurality of printable selections in a memory device (22) in the printer;
in response to a user operating a selector on the printer indicating a particular selection, generating a printout (40) of the selection; and
after generating the printout, laminating the printout in a laminator (50) in the printer.

8. The method of claim 7 including changing the stored printable selections.

9. The method of claim 8 wherein changing the stored printable selections comprises engaging in a step selected from the steps of replacing the memory device (22) with a different memory device, connecting a storage media to the printer, and connecting to a remote memory source (46).

10. The method of claim 7 including displaying identifiers associated with the printable selections.
